# EUROPÄISCHE PATENTANMELDUNG

(11) **EP 4 353 447 A1**
(43) Veröffentlichungstag der Anmeldung: **17.04.2024**
(21) Anmeldenummer: 23208038.2
(22) Anmeldetag: 06.06.2019
(51) Int. Cl.: B29C 64/106, B29C 64/209, B29C 64/00, B33Y 10/00, B33Y 30/00, B33Y 70/10

(54) **VORRICHTUNG UND VERFAHREN ZUR ERZEUGUNG DREIDIMENSIONALER GEGENSTÄNDE**

(30) Priorität: 12.06.2018 DE 102018114008
(62) Teilanmeldung aus: 19729277.4
(71) Anmelder: Q.Big 3D GmbH, 73430 Aalen (DE)
(72) Erfinder: HEEL, Michael, 73430 Aalen (DE); HERRMANN, Dennis, 71384 Weinstadt (DE); SCHLICHTING, Katja, 97834 Birkenfeld (DE)
(74) Vertreter: Hoefer & Partner Patentanwälte mbB

(57) **Zusammenfassung**

Vorrichtung zur Erzeugung dreidimensionaler Gegenstände aus einem verformbaren Material, mit folgenden Merkmalen: einem Gehäuse, das eine Kammer zur Aufnahme des verformbaren Materials aufweist, einer Zuführeinrichtung zur Zuführung des verformbaren Materials in die Kammer des Gehäuses, einer ersten Ausgabeöffnung zur Ausgabe des verformbaren Materials aus der Kammer des Gehäuses, einer Verschließeinrichtung mit Längsbohrung zum wahlweisen Verschließen und Freigeben der ersten Ausgabeöffnung, einer zweiten Ausgabeöffnung, die einen kleineren Querschnitt aufweist als die erste Ausgabeöffnung und die Bohrung sich in Längsrichtung x aufteilt, wobei die Ausgabeöffnungen konzentrisch angeordnet sind.

## Beschreibung

Die Erfindung betrifft eine Vorrichtung und ein Verfahren zur Erzeugung dreidimensionaler Gegenstände aus einem verformbaren Material.

Eine Vorrichtung zur Erzeugung dreidimensionaler Gegenstände aus einem verformbaren Material ist aus der US 9,821,905 B2 bekannt.

Aus der WO 2014/153535 A2 ist ein Drucker für dreidimensionale Objekte bekannt, bei dem mit dem eigentlichen Druckmaterial ein beispielsweise fadenförmiges Versteifungsmaterial ausgegeben wird.

Die US 5,936,861 beschreibt eine Vorrichtung und ein Verfahren zur Erzeugung dreidimensionaler Gegenstände aus einem verformbaren Material, bei denen mit dem verformbaren Material eine Verstärkungsfaser ausgegeben wird.

In der US 6,899,777 B2 ist ein Verfahren zum kontinuierlichen Extrudieren beschrieben, bei dem eine Keramik-, Metall-, oder Kunststofffaser gemeinsam mit einem thermoplastischen Elastomer extrudiert wird.

Die EP 2 676 784 A1 beschreibt ein Verfahren zur Herstellung eines Gegenstands mittels Extrudieren. Dabei wird einem Extrusionskopf ein Filament zugeführt und gemeinsam mit einem Matrixmaterial aus demselben ausgegeben.

In der US 2014/0232035 A1 ist eine Vorrichtung zum Herstellen von Gegenständen mittels Extrusion, die eine Extrusionsnadel zum Extrudieren von thermoplastischem Material zusammen mit mehreren Fasersträngen aufweist, beschrieben.

Aus der US 9,511,543 B2 sind ein Verfahren und eine Vorrichtung zur additiven Herstellung von dreidimensionalen Gegenständen bekannt. Dabei werden mehrere Materialien gleichzeitig als ein Verbundstoff extrudiert. Hierbei liegt mindestens ein Material in flüssiger und mindestens ein Material in fester Form vor.

Die DE 10 2011 050 780 A1 beschreibt ein Verfahren und eine Vorrichtung zum Aufbringen einer Endlosfaser auf ein Objekt. Hierzu dient eine Auftragsdüse, der eine Endlosfaser und ein Imprägniermaterial zugeführt werden.

Die bekannten Lösungen sind jedoch relativ unflexibel und können daher meist nur sehr eingeschränkt eingesetzt werden.

Es ist daher Aufgabe der vorliegenden Erfindung, eine Vorrichtung und ein Verfahren zur Erzeugung dreidimensionaler Gegenstände aus einem verformbaren Material zu schaffen, die einen flexibleren Einsatz erlauben.

Erfindungsgemäß wird diese Aufgabe durch die in Anspruch 1 genannten Merkmale gelöst.

Mit der erfindungsgemäßen Vorrichtung ist es aufgrund der beiden Ausgabeöffnungen, die unterschiedliche Querschnitte aufweisen, möglich, unterschiedliche Mengen des verformbaren Materials auszugeben. Dabei kann jede Ausgabeöffnung unabhängig von der anderen verschlossen bzw. freigegeben werden, so dass entweder eine geringe Menge des verformbaren Materials zu der einen kleineren Querschnitt aufweisenden zweiten Ausgabeöffnung oder eine größere Menge des verformbaren Materials zu der einen größeren Querschnitt aufweisenden ersten Ausgabeöffnung ausgegeben werden kann. Des Weiteren ist es möglich, die erfindungsgemäße Vorrichtung vollständig zu schließen, so dass keinerlei Material aus derselben gelangen kann. Dies ist insbesondere dann vorteilhaft, wenn die Vorrichtung zwischen zwei Punkten bewegt werden soll, ohne dass verformbares Material ausgegeben werden soll.

Durch diesen Aufbau lässt sich die erfindungsgemäße Vorrichtung sehr flexibel einsetzen, da im Gegensatz zu bekannten Lösungen stets die jeweils gewünschte Menge an verformbarem Material ausgegeben werden kann. Im Falle der Verwendung der den kleineren Querschnitt aufweisenden zweiten Ausgabeöffnung können sehr feine Oberflächen erzeugt werden, wohingegen es bei der Verwendung der den größeren Querschnitt aufweisenden ersten Ausgabeöffnung möglich ist, sehr große Mengen des verformbaren Materials aufzubringen und dadurch sehr große Strukturen in vergleichsweise kurzer Zeit zu erzeugen.

In einer sehr vorteilhaften Weiterbildung der Erfindung kann vorgesehen sein, dass die zweite Verschließeinrichtung innerhalb des Hohlraums der ersten Verschließeinrichtung angeordnet ist. Dadurch ergibt sich eine sehr kompakte Konstruktion der erfindungsgemäßen Vorrichtung.

Wenn in einer weiteren vorteilhaften Ausgestaltung der Erfindung die erste Verschließeinrichtung zum wahlweisen Verschließen und Freigeben der ersten Ausgabeöffnung mittels einer Verstellanordnung in ihrer Längsrichtung verstellbar ist, so ist zum einen ein sehr schnelles Verschließen bzw. Freigeben der ersten Ausgabeöffnung möglich. Zum anderen kann dadurch der Querschnitt der ersten Ausgabeöffnung im Prinzip stufenlos eingestellt werden, da es möglich sein kann, die erste Verschließeinrichtung in beliebigen Stellungen zwischen einem vollständigen Freigeben und einem vollständigen Verschließen der ersten Ausgabeöffnung zu positionieren. Darüber hinaus ermöglicht eine solche Lösung eine relativ einfache Konstruktion des Antriebs der Verstellanordnung zur Verstellung der Verschließeinrichtung, die mit einem geringen Bauraumbedarf realisiert werden kann.

Eine weitere vorteilhafte Ausgestaltung der Erfindung kann darin bestehen, dass die zweite Verschließeinrichtung zum wahlweisen Verschließen und Freigeben der Verbindungsbohrung mittels einer Verstellanordnung in ihrer Längsrichtung verstellbar ist. Wenn auch die zweite Verschließeinrichtung in ihrer Längsrichtung verstellbar ist, so ergeben sich ähnliche Vorteile wie bei der Verstellung der ersten Verschließeinrichtung in ihrer Längsrichtung. Des Weiteren lässt sich auf diese Weise die durch die erste Verschließeinrichtung verlaufende Verbindungsbohrung, mit der der zu der zweiten Ausgabeöffnung führende Hohlraum mit der Kammer des Gehäuses verbunden ist, auf sehr einfache Weise verschließen und freigeben. Bei der zum Verstellen der zweiten Verschließeinrichtung eingesetzten Verstellanordnung kann es sich um dieselbe Verstellanordnung handeln, die zum Verstellen der ersten Verschließeinrichtung eingesetzt wird.

Alternativ zu der Verstellung der zweiten Verschließeinrichtung in ihrer Längsrichtung ist es auch möglich, dass die zweite Verschließeinrichtung zum wahlweisen Verschließen und Freigeben der Verbindungsbohrung mittels einer Verstellanordnung um ihre Längsachse verdrehbar ist. Auch auf diese Weise lässt sich die Verbindungsbohrung verschließen oder freigeben.

Wenn in einer weiteren vorteilhaften Ausgestaltung der Erfindung die Verstellanordnung eine Steuerhülse mit wenigstens einer Nut aufweist, in die wenigstens ein mit einer der Verschließeinrichtungen verbundener Stift eingreift, wobei die Steuerhülse und die wenigstens eine Verschließeinrichtung relativ zueinander drehbar sind, so ergibt sich eine zuverlässige Möglichkeit zur Betätigung zumindest einer der Verschließeinrichtungen. In dem Fall, dass sowohl die erste als auch die zweite Verschließeinrichtung mittels der Verstellanordnung in ihrer Längsrichtung verstellbar sind, kann die Steuerhülse für beide Verschließeinrichtungen separate Nuten aufweisen, die ähnlich ausgeführt sein können. Die Steuerhülse lässt sich jedoch auch zur Verdrehung der zweiten Verschließeinrichtung um ihre Längsachse einsetzen.

Eine einfache und zuverlässige Relativbewegung zwischen der Steuerhülse und der wenigstens einen Verschließeinrichtung ergibt sich, wenn die Steuerhülse und/oder die wenigstens eine Verschließeinrichtung mittels einer über eine Getriebeanordnung mit der Steuerhülse und/oder der wenigstens einen Verschließeinrichtung in Wirkverbindung stehende Antriebseinrichtung verdrehbar ist.

Eine weitere vorteilhafte Ausgestaltung der Erfindung kann darin bestehen, dass die Getriebeanordnung als Zahnradgetriebe oder als Riemengetriebe ausgebildet ist. Sowohl mittels eines Riemengetriebes als auch mittels eines Zahnradgetriebes lässt sich die Steuerhülse bzw. wenigstens eine der Verschließeinrichtungen sehr einfach mittels der Antriebseinrichtung, beispielsweise mittels eines Elektromotors, antreiben, wobei ein besonderer Vorteil eines Riemengetriebes bzw. eines Zahnradgetriebes in seiner Unanfälligkeit für hohe Temperaturen zu sehen ist.

Eine weitere vorteilhafte Ausgestaltung der Erfindung kann darin bestehen, dass wenigstens eine der Verschließeinrichtungen drehfest gehalten ist. Dadurch werden unerwünschte Drehbewegungen der wenigstens einen Verschließeinrichtung verhindert, so dass ein zuverlässiger Betrieb der Vorrichtung gewährleistet ist.

Eine verfahrensgemäße Lösung ergibt sich aus den Merkmalen von Anspruch 10.

Durch das erfindungsgemäße Verfahren, bei dem der Schritt des Ausgebens des verformbaren Materials aus der zweiten, einen kleineren Querschnitt aufweisenden Ausgabeöffnung vor dem Schritt des Ausgebens des verformbaren Materials aus der ersten, einen größeren Querschnitt aufweisenden Ausgabeöffnung durchgeführt wird, ist es möglich, eine zuvor durch aus der zweiten Ausgabeöffnung ausgegebenes Material gebildete Struktur zu erweitern bzw. zu versteifen, so dass am äußeren Umfang eines mit dem erfindungsgemäßen Verfahren gebildeten Gegenstands durch die vergleichsweise dünnen, aus der zweiten Ausgabeöffnung ausgegebenen Stränge des verformbaren Materials eine hohe Oberflächenqualität vorhanden ist, wohingegen durch den größeren Querschnitt der ersten Ausgabeöffnung sehr viel von dem verformbaren Material in sehr kurzer Zeit ausgegeben werden kann, so dass auch größere Bauteile in vergleichsweise kurzer Zeit erzeugt werden können.

Insbesondere kann durch das Ausgeben des verformbaren Materials aus der ersten, größeren Ausgabeöffnung ein innerer, versteifender Bereich des zu erzeugenden Gegenstands, der auch als Infill bezeichnet wird, gebildet werden. Das aus der zweiten Ausgabeöffnung ausgegebene verformbare Material bildet dabei im Prinzip ein Gerüst, das durch das aus der ersten Ausgabeöffnung ausgegebene verformbare Material versteift wird.

Das aus der ersten Ausgabeöffnung ausgegebene verformbare Material kann dabei in der Art einer Gitterstruktur in das zuvor gebildete Gerüst eingebracht werden, was zu einer besseren Versteifung des mit dem erfindungsgemäßen Verfahren hergestellten Gegenstands führt. Auf diese Weise wird demnach eine erhebliche Zeitersparnis gegenüber bekannten Verfahren erreicht. Das erfindungsgemäße Verfahren ist besonders, jedoch nicht ausschließlich, für dünnwandige Bauteile geeignet, die ein inneres Volumen aufweisen, das durch das aus der ersten Ausgabeöffnung ausgegebene verformbare Material gebildet wird.

Dabei wird auch der Effekt ausgenutzt, dass die einen größeren Querschnitt aufweisenden Stränge des verformbaren Materials die feine Oberfläche der aus den einen kleineren Querschnitt aufweisenden Strängen des verformbaren Materials gebildeten Umrandung nicht negativ beeinflussen, sondern sich vielmehr innen an die zuerst gebildete Struktur anlegen.

Nachfolgend sind Ausführungsbeispiele der Erfindung anhand der Zeichnung prinzipmäßig dargestellt.

### Es zeigt:

- Fig. 1: einen Schnitt durch eine Vorrichtung zur Erzeugung dreidimensionaler Gegenstände aus einem verformbaren Material;
- Fig. 2: die Vorrichtung aus Fig. 1 in einer ersten Konfiguration;
- Fig. 3: die Vorrichtung aus Fig. 1 in einer zweiten Konfiguration;
- Fig. 4: die Vorrichtung aus Fig. 1 in einer dritten Konfiguration;
- Fig. 5: eine weitere Ausführungsform der Vorrichtung zur Erzeugung dreidimensionaler Gegenstände aus einem verformbaren Material;
- Fig. 6: die Vorrichtung aus Fig. 5 in einer anderen Konfiguration;
- Fig. 7: einen beispielhaften Ablaufplan eines Verfahrens zur Erzeugung dreidimensionaler Gegenstände aus einem verformbaren Material;
- Fig. 8: drei Modi zur Durchführung des Verfahrens zur Erzeugung dreidimensionaler Gegenstände aus einem verformbaren Material;
- Fig. 9: eine schematische Darstellung einer erfindungsgemäßen Vorrichtung in einer ersten Position;
- Fig. 10: die Vorrichtung aus Fig. 9 in einer zweiten Position;
- Fig. 11: die Vorrichtung aus Fig. 9 in einer dritten Position;
- Fig. 12: eine detailliertere Darstellung der erfindungsgemäßen Vorrichtung in der Position von Fig. 9;
- Fig. 13: eine perspektivische Darstellung eines Teils der erfindungsgemäßen Vorrichtung gemäß der Figuren 9 bis 12; und
- Fig. 14: eine Draufsicht auf eine alternative Ausführungsform eines Teils der erfindungsgemäßen Vorrichtung gemäß der Figuren 9 bis 12.

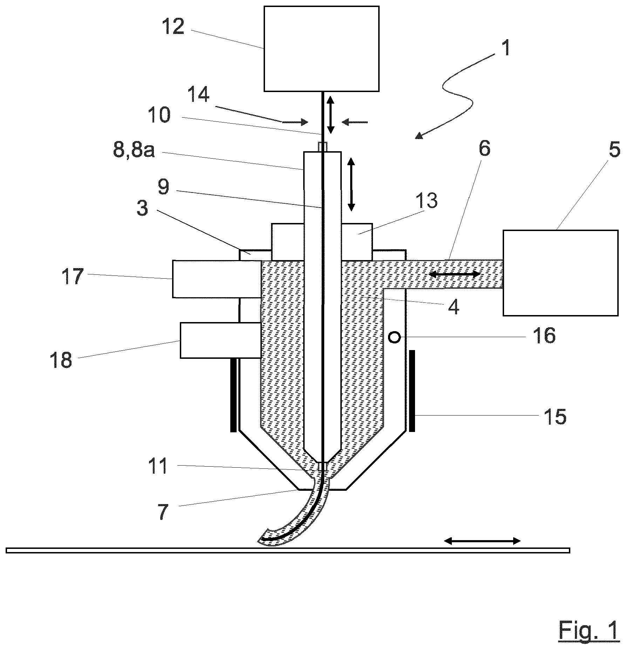

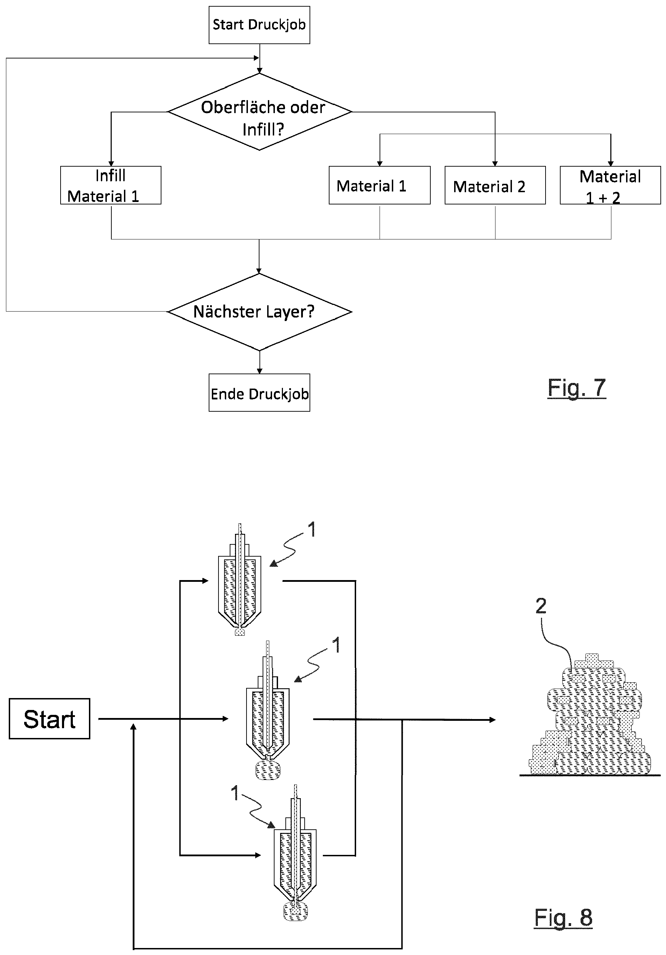

Fig. 1 zeigt eine Vorrichtung 1 zur Erzeugung dreidimensionaler Gegenstände 2. Ein beispielhafter dreidimensionaler Gegenstand 2 ist in Fig. 8 in unterschiedlichen Modi eines Verfahrens zur Erzeugung des dreidimensionalen Gegenstands 2 dargestellt.

Die Vorrichtung 1 weist ein Gehäuse 3 auf, das zur Aufnahme eines verformbaren Materials 4 dient, aus dem unter anderem der dreidimensionale Gegenstand 2 hergestellt werden kann. Zur Zuführung des verformbaren Materials 4 zu dem Gehäuse 3 dient eine Zuführeinrichtung 5, die beispielsweise einen nicht dargestellten Extruder aufweisen kann. Die Zuführeinrichtung 5 weist des Weiteren eine Zuführleitung 6 auf, die unmittelbar zu dem Gehäuse 3 führt und das verformbare Material 4 dem Gehäuse 3 zuführt. Beispielsweise kann das verformbare Material 4 in der Zuführeinrichtung 5 in Form eines festen Granulats vorliegen. In nicht dargestellter Weise kann der Extruder mittels eines beweglichen bzw. flexiblen Verbindungsschlauchs, der insbesondere als Heizschlauch ausgebildet sein kann, mit dem Druckkopf bzw. dem Gehäuse 3 verbunden sein, um Bewegungen zwischen diesen beiden Elementen auszugleichen. Dadurch ist an dem Druckkopf eine geringere zu bewegende Masse vorhanden.

Das verformbare Material 4 wird über eine erste Ausgabeöffnung 7, die sich im vorliegenden Fall an der Unterseite des Gehäuses 3 befindet, aus demselben ausgegeben. Des Weiteren weist die Vorrichtung 1 eine Verschließeinrichtung 8 auf, die zum wahlweisen Verschließen und Freigeben der ersten Ausgabeöffnung 7 dient und die im vorliegenden Fall so ausgebildet ist, dass mittels derselben der Querschnitt der ersten Ausgabeöffnung 7 zumindest in mehreren Stufen, insbesondere stufenlos, veränderbar ist. Durch den variablen Querschnitt der ersten Ausgabeöffnung 7 können die Bahnbreite und Höhe der einzelnen Schichten des verformbaren Materials 4 beim Druckvorgang verändert werden. Beispielsweise kann das Extrusionsvolumen des aus der ersten Ausgabeöffnung 7 ausgegebenen verformbaren Materials 4 bis zu 2 cm³ pro Sekunde betragen, was wesentlich größer als bei bekannten Lösungen ist, so dass der dreidimensionale Gegenstand 2 in wesentlich kürzerer Zeit hergestellt werden kann. Das genannte Extrusionsvolumen ist dabei nur als Beispiel anzusehen. Die Vorrichtung 1 kann sowohl für extrem kleine Anwendungen, z.B. auf zellularer Ebene, als auch für extrem große Anwendungen, z.B. auf Schiffs- bzw. Hausbauebene, sowie für alle dazwischenliegenden Anwendungen verwendet werden. Dementsprechend fallen auch ihre Größe und das mögliche Extrusionsvolumen aus. Die erste Ausgabeöffnung 7 kann rund, oval, rechteckig, vieleckig oder ähnlich ausgebildet sein. Insbesondere sind auch Freiformflächen bzw. Formen ohne jegliche Symmetrie möglich.

Der Bereich, in dem sich die erste Ausgabeöffnung 7 befindet, kann als regelmäßige Pyramidenform, beispielsweise mit drei oder mehreren Ecken, als Kegel oder Kegelstumpf, als Halbkugel oder als Kugelspitze ausgeführt sein. Auch unregelmäßige Formen dieses Bereichs sind möglich.

Im vorliegenden Fall handelt es sich bei der Verschließeinrichtung 8 um eine Nadel 8a, die nicht nur die Verschließeinrichtung 8 bildet, sondern auch eine in Längsrichtung durch dieselbe verlaufende Bohrung 9 aufweist, durch welche das verformbare Material 4 oder ein Zusatzmaterial 10 führbar ist. Vorzugsweise weist die Bohrung 9 einen Innendurchmesser auf, der im Wesentlichen dem Außendurchmesser des Zusatzmaterials 10 entspricht bzw. etwas größer sein kann. Die Bohrung 9 ermöglicht somit das Einbetten des Zusatzmaterials 10 in den Druckprozess. Wenn die Nadel 8a die Verschließeinrichtung 8 bildet, ermöglicht dies die Bildung einer sehr kompakten Vorrichtung 1, da die Nadel 8a in diesem Fall nicht nur zum Ausgeben des Zusatzmaterials 10, sondern auch zum Verschließen der ersten Ausgabeöffnung 7, über die das verformbare Material 2 ausgegeben wird, eingesetzt wird und dadurch auf eine Vielzahl an Bauteilen verzichtet werden kann.

Die Bohrung 9 innerhalb der Nadel 8a kann konzentrisch oder nicht konzentrisch, d. h. dezentriert, innerhalb der Nadel 8a angebracht sein. Es kann sich auch um zwei oder mehr Bohrungen 9 handeln, die regelmäßig oder auch unregelmäßig relativ zueinander angeordnet sein können. Wenn mehrere der Bohrungen 9 vorgesehen sind, können auch mehrere Zusatzmaterialien 10, die gegebenenfalls unterschiedlich sein können, durch die zweite Ausgabeöffnung 11 ausgegeben werden. Des Weiteren kann die Bohrung 9 sich in Längsrichtung x aufteilen oder es können zwei oder mehrere Bohrungen zusammenlaufen.

Im unteren Bereich der Nadel 8a befindet sich eine zweite Ausgabeöffnung 11, die zur Ausgabe des Zusatzmaterials 10 aus der Nadel 8a dient. Die Zuführung des Zusatzmaterials 10 in die Bohrung 9 der Nadel 8a erfolgt mittels einer zweiten Zuführeinrichtung 12, die im vorliegenden Fall oberhalb der Nadel 8a angeordnet ist.

Die zweite Zuführeinrichtung 12 für das Zusatzmaterial 10 kann eine geeignete Antriebseinrichtung, beispielsweise ein oder mehrere Piezoelemente, einen Schrittmotor oder dergleichen, aufweisen. Beispielsweise kann die zweite Zuführeinrichtung 12 zwei entgegenlaufende Rollen aufweisen, wobei das Zusatzmaterial 10 zwischen den Rollen liegt. Diese Rollen können das Zusatzmaterial 10 in die Bohrung 9 der Nadel 8a schieben oder ziehen, je nach Anordnung der Zuführeinrichtung 12. Dabei kann die zweite Zuführeinrichtung 12 direkt vor der Nadel 8a, direkt nach der Nadel 8a, innerhalb der Nadel 8a oder auch an anderer Stelle ausgelagert sein. Selbstverständlich könnte auch die erste Zuführeinrichtung 5 andersartig gegenüber dem Gehäuse 3 angeordnet sein. Zum Beispiel kann sich das Zusatzmaterial 10 in gewickelter Form auf einer zu der zweiten Zuführeinrichtung 12 gehörenden Spule oder dergleichen befinden.

Im vorliegenden Fall ist die Nadel 8a in ihrer Längsrichtung x stufenlos gegenüber dem Gehäuse 3 beweglich, wodurch die Durchflussmenge bzw. das Ausgabevolumen des verformbaren Materials 4 durch die erste Ausgabeöffnung 7 stufenlos veränderbar ist und eine sehr exakte Steuerung der über die erste Ausgabeöffnung 7 ausgegebenen Menge des verformbaren Materials 4 ermöglicht wird. Eine entsprechende Antriebs- bzw. Verschiebeeinrichtung zum Bewegen der Nadel 8a in der Längsrichtung x ist in den Figuren nicht dargestellt.

Selbstverständlich sind zusätzlich oder alternativ zu der Nadel 8a auch weitere Bauteile einsetzbar, um den Querschnitt der ersten Ausgabeöffnung 7 zu ändern. Die Veränderung des Querschnitts der ersten Ausgabeöffnung 7 kann zum Beispiel auch durch Austauschen des Bereichs, in dem sich die erste Ausgabeöffnung 7 befindet, erfolgen. Gegebenenfalls kann sich in diesem Bereich auch eine Schablone mit verschiedenen Lochdurchmessern befinden, oder es ist ein Revolverdesign möglich, das mehrere der ersten Ausgabeöffnungen 7 mit jeweiligen unterschiedlichen Querschnitten aufweist. Diese Löcher bzw. Bohrungen mit unterschiedlichen Querschnitten zur Bildung der ersten Ausgabeöffnung 7 können radial oder linear angeordnet sein. Des Weiteren sind insbesondere stufenlos verstellbare Querschnitte der ersten Ausgabeöffnung 7 in der Art einer Irisblende, einer Schleife bzw. Spirale aus einem temperaturbeständigen Material, beispielsweise einem Metallband bzw. -faden, aus Kapton, Kevlar oder einem hochtemperaturbeständigen Silikon möglich. Eine weitere Möglichkeit besteht darin, die Verengung durch radial angeordnete Finger zu erzeugen, deren Abstand zueinander variabel ist. Des Weiteren ist eine Stauchung von flexiblem Material im Bereich der ersten Ausgabeöffnung 7 möglich, die ähnlich dem Anschlussmechanismus einer Fahrradpumpe ausgeführt ist und beispielsweise aus Silikon oder einem Metall mit Poren in Nanogröße besteht. Auch eine Kombination sämtlicher angegebener Ausführungen ist denkbar.

Des Weiteren weist die Vorrichtung 1 eine sehr schematisch angedeutete Druckerzeugungseinrichtung 13 auf, die zur Erzeugung und Steuerung eines Drucks auf das sich in dem Gehäuse 3 befindende verformbare Material 4 dient. Die Druckerzeugungseinrichtung 13 kann ähnlich einer Feder ausgebildet sein, deren auf das verformbare Material 4 wirkende Kraft jedoch einstellbar ist. Durch die Druckerzeugungseinrichtung 13 zur Erzeugung und Steuerung eines Drucks auf das sich in dem Gehäuse 3 befindende verformbare Material 4 ergibt sich ein gleichmäßiges Ausgeben des verformbaren Materials.

Die Druckerzeugungseinrichtung 13, die auch als Druckspeicher dienen kann, kann auf die unterschiedlichsten Arten ausgeführt sein. Beispielswiese kann es sich um eine mechanische Druckerzeugungseinrichtung 13 handeln, die beispielsweise eine oder mehrere Tellerfedern, Spiralfedern, Wellenfedern, Schraubenfedern, Evolutfedern, Blattfedern, Gummidämpfer, Gummibänder und sämtliche Kombinationen aus den genannten Elementen aufweisen kann. Des Weiteren kann es sich um eine pneumatische und/oder hydraulische Druckerzeugungseinrichtung handeln, die beispielsweise mit Überdruck oder mit Unterdruck arbeitet. Auch eine elektromechanische Ausführung der Druckerzeugungseinrichtung 13 ist denkbar. Die Druckerzeugungseinrichtung 13 kann auch in der Zuführeinrichtung 5 enthalten sein, z.B. in Form einer mechanisch drehbaren Schnecke, die das Volumen innerhalb des Gehäuses 3 durch Änderung der Rotationsgeschwindigkeit steuert.

Beispielsweise kann das Volumen innerhalb des Gehäuses 3 mittels eines mit einem optischen Messprinzip und/oder mit Ultraschall arbeitenden Entfernungsmessers oder mit einem hydraulisch bzw. pneumatisch arbeitenden Drucksensor gemessen werden. Dabei kann auch ein Regelsystem erzeugt werden, das an das jeweilige Prinzip der Druckerzeugungseinrichtung 13 und/oder der Zuführeinrichtung 5 angepasst sein kann. Dieses kann demnach mit dem Federweg und einem von außen ausgeübten Druck, einem pneumatischen oder hydraulischen Druck in einer Druckkammer sowie einem von außen ausgeübten Druck und/oder einem einen Teil des Druckspeichers bildenden Stellmotor und einem von außen ausgeübten Druck arbeiten.

Des Weiteren ist in Fig. 1 sehr schematisch eine Trenneinrichtung 14 zum Abtrennen des Zusatzmaterials 10 dargestellt. Die Trenneinrichtung 14 kann eine oder mehrere Schneiden aufweisen, die flach, eckig, in Scherenform oder rund in der Art eines Zigarrenschneiders ausgebildet sein können. Die Trenneinrichtung 14 kann vor der Nadel 8a, nach der Nadel 8a oder in der Nadel 8a vorgesehen sein. Es können ein oder mehrere feststehende Schneiden und eine oder mehrere sich zueinander bewegende Schneiden vorgesehen sein. Des Weiteren können auch zwei oder mehrere sich zueinander bewegende Schneiden vorgesehen sein, wobei die Bewegung auch in zwei Achsen zueinander möglich ist. Auch Kombinationen hieraus sind denkbar. Eine Trennung des Zusatzmaterials 10 mittels der Trenneinrichtung 14 ist insbesondere dann sinnvoll bzw. angebracht, wenn von einem der nachfolgend beschriebenen Modi zum Betrieb der Vorrichtung 1 in einen anderen Modus gewechselt wird bzw. bei einem Positionswechsel der Vorrichtung 1. Dabei kann die Trenneinrichtung 14 so gesteuert werden, dass das Zusatzmaterial 10 bei einem nachfolgenden Moduswechsel zugeführt oder nicht mehr zugeführt wird. Durch die Trenneinrichtung 14 zum Abtrennen des Zusatzmaterials 10 kann ein flexibles Arbeiten bei der Verwendung des Zusatzmaterials 10 gewährleisten werden.

Das Zusatzmaterial 10 kann grundsätzlich sowohl technische als auch rein optische Aufgaben übernehmen. Bei dem Zusatzmaterial 10 handelt es sich vorzugsweise um ein Versteifungsmaterial, wie beispielsweise einen Faden aus einem festen bzw. hochfesten Werkstoff, wie zum Beispiel Aramid, Karbon, Kevlar oder dergleichen. Das Zusatzmaterial 10 kann außerdem aus den unterschiedlichsten Materialien, wie zum Beispiel Naturfasern, wie Holz, Steinstaub, Hanffasern, Baumwolle oder ähnliches, Kunstfasern, Kunststofffilamenten, Glasfasern, elektrischen Leitermaterialien, Schläuchen, Kanülen, organischen oder künstlichen Geweben, chemischen oder organischen Flüssigkeiten, wie zum Beispiel Klebstoffen, sowie Gasen in jeglicher Form ausgeführt sein. Es ist jedoch auch möglich, ein Harz als das Zusatzmaterial 10 einzusetzen.

Das vorzugsweise in Form einer Faser ausgebildete Zusatzmaterial 10 kann verdrillt, lose, zerstückelt oder geflochten vorgesehen sein. Es kann sich um Kurz-, Lang- und Endlosfasern handeln. Die Faser kann eine vorgeprägte Form aufweisen und zum Beispiel spiralförmig oder gefaltet sein. Eine solche Faser kann auch vorbehandelt werden, beispielsweise durch Tränken in einer Flüssigkeit, die durch bestimmte Umwelteinflüsse aushärtet. Die Flüssigkeit kann dabei auch erst innerhalb der Nadel 8a oder beim Verlassen derselben aushärten. Die Faser kann mit einem Matrixmaterial verschmolzen oder ummantelt werden. Des Weiteren ist es möglich, die das Zusatzmaterial 10 bildende Faser zu lackieren, zu polieren, statisch aufzuladen oder zu verdichten.

In einer Ausführungsform könnte das Zusatzmaterial 10 einen Mantel aus einem flexiblen Material aufweisen, wobei der innerhalb des Mantels angeordnete Fadenkern für eine erhöhte Reißfestigkeit auch dann sorgt, wenn das Material des Mantels beschädigt ist. Außerdem kann die Faser bzw. der Faden die Dehnung des flexiblen Materials des Mantels begrenzen. In diesem Zusammenhang ist auch ein separates Ummantelungssystem für die das Zusatzmaterial 10 bildende Faser denkbar. Dieses kann unmittelbar vor der Einführung des Zusatzmaterials 10 in die Nadel 8a angeordnet oder auch an anderer Stelle ausgelagert sein.

Es ist auch möglich, das Zusatzmaterial 10 so auszuwählen, dass eine chemische Reaktion mit dem verformbaren Material 4 sich ergibt, um den Zustand des verformbaren Materials 4 und/oder des Zusatzmaterials 10 zu ändern.

Bei dem verformbaren Material 4 kann es sich um jegliche Arten von Flüssigkeiten handeln, die nach dem Austritt aus der ersten Ausgabeöffnung 7 aufgrund des Temperaturunterschieds zu der Umgebungstemperatur erstarrt. Auch ein fotochemisches Erstarren bzw. Aushärten des verformbaren Materials 4, zum Beispiel durch Bestrahlung mittels bestimmter Lichtquellen oder gegebenenfalls auch durch das Umgebungslicht, aushärten. Auch ein chemisches Aushärten bzw. Erstarren durch die Reaktion zweier Komponenten, die sich in dem verformbaren Material 4 befinden bzw. das verformbare Material 4 bilden, ist möglich. Bei dem verformbaren Material 4 kann es sich auch um ein Zweikomponenten-Material handeln, das unter bestimmten Bedingungen aushärtet. Auch ein Aushärten des verformbaren Materials mittels Strahlung in bestimmten Wellenlängen, z. B. UV-Strahlung, ist denkbar.

Um das Gehäuse 3 ist des Weiteren eine Temperiereinrichtung 15 angeordnet, mit welcher das verformbare Material 4 beheizt und/oder gekühlt werden kann. Die Temperiereinrichtung 15 ist im vorliegenden Fall mit einem Temperatursensor 16 verbunden, der zur Messung einer Temperatur des verformbaren Materials 4 dient. Das Gehäuse 3 kann im Bereich der ersten Ausgabeöffnung 7 weitere Temperiereinrichtungen, insbesondere Heizeinrichtungen, vorsehen.

Des Weiteren sind an dem Gehäuse 3 ein Rückführventil 17, das zur Rückführung von nicht benötigtem verformbaren Material 4 dient, sowie ein Drucksensor 18 angeordnet, der Teil der Druckerzeugungseinrichtung 13 ist und die Steuerung bzw. Regelung des Drucks auf das sich in dem Gehäuse 3 befindende verformbare Material 4 vereinfacht.

Das Rückführventil 17, das Teil eines Rückführsystems für das verformbare Material 4 darstellt, kann als Überdruckventil ausgebildet sein, das verhindert, dass die gesamte Vorrichtung 1 und insbesondere der den Druckkopf bildende, die erste Ausgabeöffnung 7 und die zweite Ausgabeöffnung 11 umfassende Druckkopf beschädigt wird. Beispielsweise kann es sich um ein Regelventil mit einem Rückführungskanal handeln, bei dem überschüssiges, verformbares Material weiter oben im Prozess in flüssiger oder fester Form wieder zugeführt wird. Eine von dem Rückführventil 17 zu der ersten Zuführeinrichtung 5 verlaufende Rückführleitung ist in den Figuren jedoch nicht dargestellt.

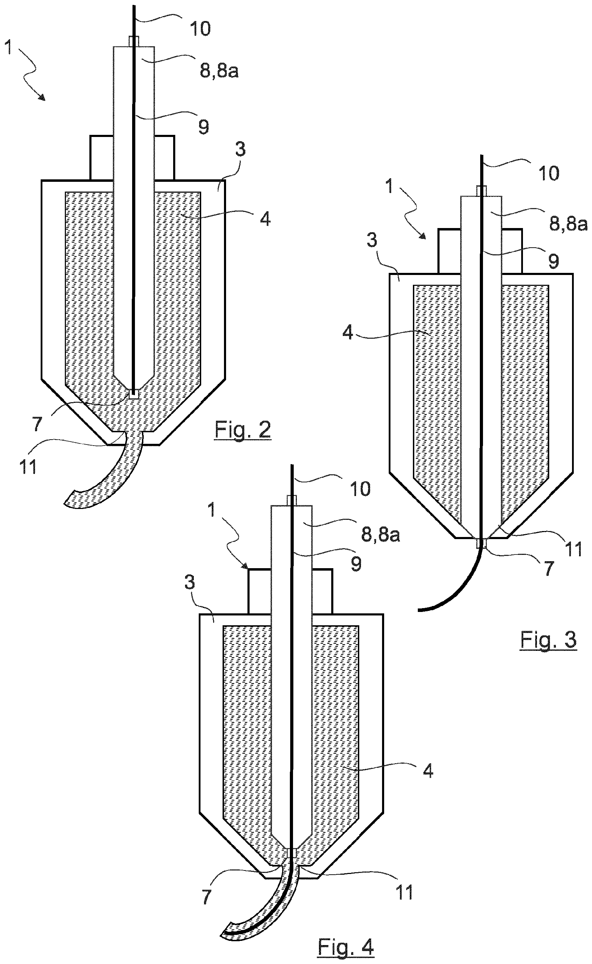

Die Figuren 2, 3 und 4 zeigen verschiedene, von der Vorrichtung 1 einnehmbare Konfigurationen bzw. Stellungen bzw. mit der Vorrichtung 1 durchführbare Verfahren, die auch als unterschiedliche Modi der Vorrichtung 1 bezeichnet werden können.

Bei der Konfiguration gemäß Fig. 2 ist die Verschließeinrichtung 8 in einer derartigen Position, dass die erste Ausgabeöffnung 7 geöffnet ist und das verformbare Material 4 zu derselben ausgegeben wird. Durch die zweite Ausgabeöffnung 11 wird in dieser Konfiguration kein Zusatzmaterial 10 gefördert. Dies kann entweder dadurch erreicht werden, dass die zweite Zuführeinrichtung 12 nicht fördert, oder dass die zweite Ausgabeöffnung 11 mittels einer nicht dargestellten Verschließeinrichtung verschlossen ist.

Dagegen ist bei der Konfiguration der Vorrichtung 1 gemäß Fig. 3 die erste Ausgabeöffnung 7 mittels der Verschließeinrichtung 8 bzw. der Nadel 8a verschlossen, so dass kein verformbares Material 4 ausgegeben wird. Allerdings wird mittels der in den Figuren 2 bis 6 nicht dargestellten zweiten Zuführeinrichtung 12 das Zusatzmaterial 10 durch die Bohrung 9 der Nadel 8a gefördert und durch die zweite Ausgabeöffnung 11 ausgegeben.

Bei der Konfiguration der Vorrichtung 1 gemäß Fig. 4 wird sowohl durch die zumindest teilweise geöffnete erste Ausgabeöffnung 7 das verformbare Material 4 als auch durch die zweite Ausgabeöffnung 11 das Zusatzmaterial 10 ausgegeben. Durch die dargestellte Anordnung der Nadel 8a innerhalb des Gehäuses 3 umgibt dabei das verformbare Material 4 das Zusatzmaterial 10.

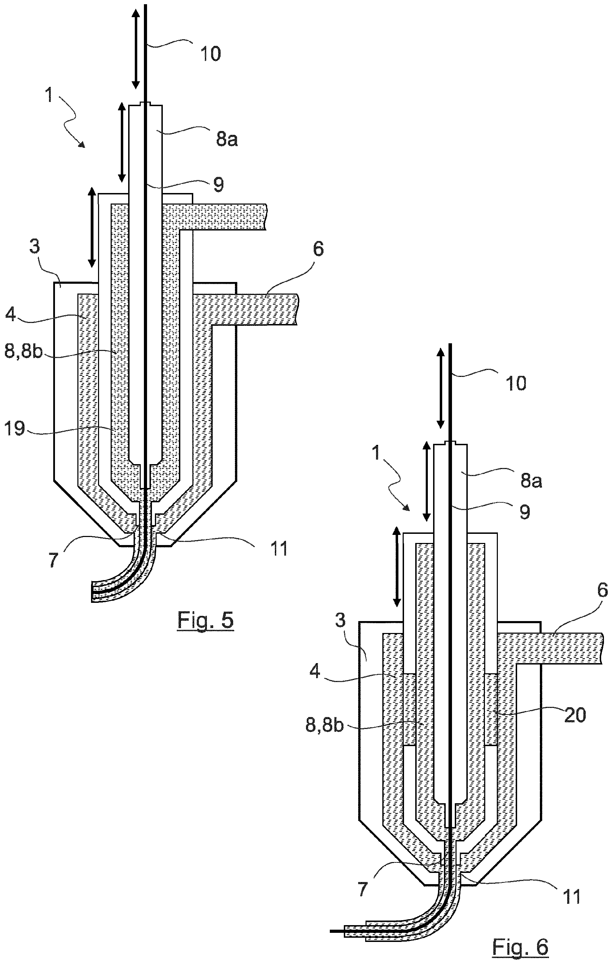

Die Figuren 5 und 6 zeigen eine alternative Ausführungsform der Vorrichtung 1 in zwei unterschiedlichen Konfigurationen bzw. Stellungen. Wie nachfolgend näher beschrieben, werden bei der Konfiguration der Vorrichtung 1 gemäß Fig. 5 drei Materialien ausgegeben, wohingegen bei der Konfiguration der Vorrichtung 1 gemäß Fig. 6 lediglich ein Material ausgegeben wird.

Bei diesen Ausführungsformen ist der Durchmesser des durch die erste Ausgabeöffnung 7 ausgegebenen Materials auch in Stufen veränderbar, indem mehrere der Nadeln, nämlich die Nadel 8a sowie eine weitere Nadel 8b und gegebenenfalls noch weitere, in den Figuren 5 und 6 jedoch nicht dargestellte Nadeln ineinander angeordnet sind. Dadurch kann entweder das verformbare Material 4 in verschiedenen Dicken ausgegeben werden, oder es können unterschiedliche Materialien, nämlich zusätzlich zu dem verformbaren Material 4 ein weiteres verformbares Material 19 mit im Prinzip beliebig vielen Ummantelungen ausgegeben werden, wobei in diesem Fall die zweite Nadel 8b die Verschleißeinrichtung 8 bildet. Dabei sind die Nadeln 8a, 8b und gegebenenfalls weitere Nadeln einzeln gegenüber einander verschieblich und es sind daher alle Kombinationen bezüglich des Ausgebens des verformbaren Materials 4, des Zusatzmaterials 10 und des Weiteren verformbaren Materials 19 möglich.

Ähnlich zu der oben beschriebenen Ausführungsform ist auch hier die Menge des ausgegebenen verformbaren Materials 4 und/oder 19, d. h. die Durchflussmenge desselben, durch die Position der Nadeln 8a und 8b steuerbar, indem die Nadeln 8a und/oder 8b in unterschiedliche Positionen in ihren Längsrichtungen x gebracht werden.

Falls nur ein Material in unterschiedlichen Dicken ausgegeben werden soll, so können die Wände der inneren Nadel 8a offen sein oder, wie in Fig. 6 dargestellt, Löcher bzw. Öffnungen 20, enthalten, wodurch das verformbare Material 4 in die Nadel 8a und/oder 8b einströmen kann, wie in Fig. 6 dargestellt.

Die oben beschriebene Vorrichtung 1 ist mit den beiden Ausgabeöffnungen 7 und 11, durch die das verformbare Material 4 oder das Zusatzmaterial 10 ausgegeben werden kann, sehr flexibel einsetzbar. So ist es möglich, entweder nur das verformbare Material 4, nur das Zusatzmaterial 10 oder das verformbare Material 4 und gleichzeitig das Zusatzmaterial 10 auszugeben. Auf diese Weise können mit der Vorrichtung 1 die unterschiedlichsten Aufgaben übernommen werden, unter anderem auch solche, die mit bekannten Vorrichtungen nicht ausgeführt werden können. Dadurch wird ein äußerst flexibler Einsatz der Vorrichtung 1 ermöglicht, so dass diese sehr nutzbringend eingesetzt werden kann.

Ein besonderer Vorteil der Vorrichtung 1 besteht dabei in dem durch die Verschließeinrichtung 8 veränderbaren Querschnitt der Ausgabeöffnung 7 für das verformbare Material 4, wodurch die Menge des in einer bestimmten Zeit ausgegebenen Materials sowie das Extrusionsvolumen verändert werden kann. Dies ermöglicht beispielsweise das Ausgeben großer Mengen des verformbaren Materials 4, um in kurzer Zeit verhältnismäßig große Gegenstände 2 zu erzeugen. In einem möglicherweise vorgeordneten Schritt können feinere Oberflächenstrukturen erzeugt werden. Dies ist im Besonderen dann sinnvoll, wenn Details auf der Oberfläche erkennbar sein müssen. Darüber hinaus ermöglicht dieser flexible Einsatz der Vorrichtung 1 es, Gegenstände 2 zu erzeugen, die einer höheren Oberflächengüte bedürfen.

In Fig. 7 ist ein beispielhafter Ablaufplan eines nachfolgend ausführlicher beschriebenen Verfahrens zur Erzeugung des dreidimensionalen Gegenstands 2 dargestellt. Grundsätzlich wird bei dem Verfahren zur Erzeugung des dreidimensionalen Gegenstands 2 aus dem verformbaren Material 4 das verformbare Material 4 aus der ersten Ausgabeöffnung 7 des Gehäuses 3 ausgegeben und es wird das Zusatzmaterial 10 aus der zweiten Ausgabeöffnung 11 der Nadel 8a ausgegeben. Diese beiden Schritte können in unterschiedlichen Reihenfolgen ausgeführt werden, wie nachfolgend beschrieben. Das nachfolgend beschriebene Verfahren sieht demnach sowohl das Ausgeben des verformbaren Materials 4 als auch des Zusatzmaterials 10 vor, so dass die unterschiedlichsten Aufgabenstellungen im Hinblick auf die Erzeugung dreidimensionaler Gegenstände 2 äußerst flexibel abgearbeitet werden können.

Zum Beispiel kann in einem ersten Schritt das verformbare Material 4 und in einem zweiten Schritt das Zusatzmaterial 10 ausgegeben werden, um eine durch das verformbare Material 4 gebildete Struktur zu glätten und/oder zu versteifen. Bei einem solchen Verfahren kann mittels des verformbaren Materials 4 in relativ kurzer Zeit ein vergleichsweise großer Körper bzw. Gegenstand gebildet werden, der anschließend durch das Zusatzmaterial 10 durch kleinere Oberflächenstrukturen erweitert und/oder geglättet und/oder versteift werden kann.

Des Weiteren bzw. alternativ dazu könnte vorgesehen sein, dass in einem ersten Schritt das Zusatzmaterial 10 ausgegeben wird und dass in einem zweiten Schritt das verformbare Material 4 ausgegeben wird, um eine durch das Zusatzmaterial 10 gebildete Struktur zu erweitern, beispielsweise zu füllen. Dadurch kann mittels des Zusatzmaterials 10 ein steifes Gebilde, beispielsweise ein Rahmen, erzeugt werden, der in einem nachfolgenden Schritt mit dem verformbaren Material 4 erweitert, beispielsweise ausgefüllt, werden kann.

Um Gegenstände in sehr kurzer Zeit und dennoch mit einer hohen Oberflächenqualität herstellen zu können, kann in einem weiteren Verfahren das verformbare Material 4 in mehreren Stufen ausgegeben werden, wobei in einer nachfolgenden Stufe die erste Ausgabeöffnung 7 mit einem erheblich geringeren Querschnitt geöffnet wird als in einer vorhergehenden Stufe. Dies ist durch die zumindest in mehreren Stufen, insbesondere stufenlos verstellbare Verschließeinrichtung 8 möglich.

Fig. 8 zeigt die drei oben beschriebenen, unterschiedlichen Modi zur Durchführung des Verfahrens. Daraus ist ersichtlich, dass alle Modi unabhängig von dem vorherigen Druckmodus gewählt werden können, wobei der dreidimensionale Gegenstand 2 auf der rechten Seite selbstverständlich nur als Beispiel anzusehen ist. Daraus ergibt sich unter anderem, dass die Oberflächenauflösung des dreidimensionalen Gegenstands 2 durch die gestreiften, kleinen Strukturen im Vergleich zu der groben Struktur geglättet wurde. Des Weiteren ist ersichtlich, dass sich auch die grobe Struktur, mit oder ohne Kern, an der Oberfläche befinden kann.

Die gesamte Vorrichtung 1 kann an einem Bewegungssystem angeordnet sein. Hierbei kann es sich um einen Mehrachsenroboterarm, ein Portalsystem, ein oder mehrere Drehgelenke, ein oder mehrere Linearantriebe, wie zum Beispiel mechanische Spindeln, hydraulische oder pneumatische Zylinder, einen Zahnriemen, ein Seil, elektromagnetische Direktantriebe oder dergleichen, ein Rollensystem, einen fahrbaren Unterbau, einen beweglichen Tisch mit entsprechenden linearen und/oder rotatorischen Achsen, eine Kombination aus mehreren Systemen handeln. Die Vorrichtung 1 kann gegebenenfalls auch an einem Flugobjekt, wie beispielsweise einer Drohne, angeordnet sein.

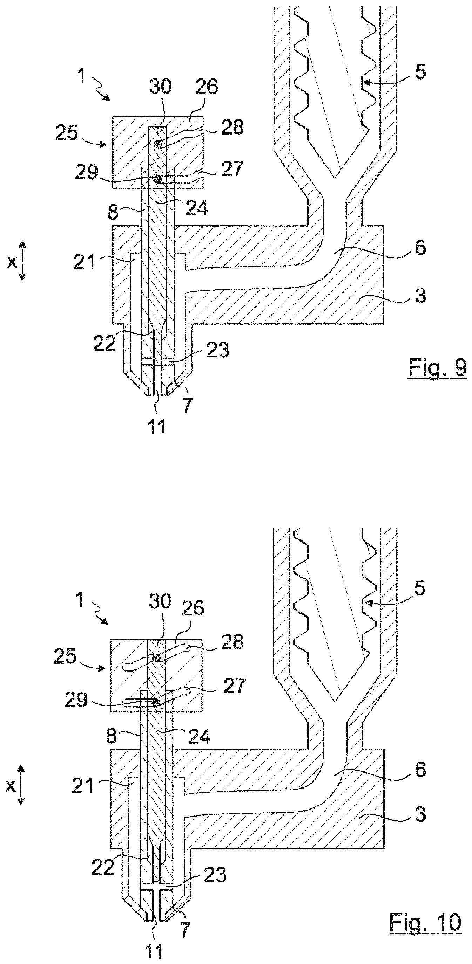

Die Figuren 9 bis 14 zeigen erfindungsgemäße Ausführungsformen der Vorrichtung 1 zur Erzeugung dreidimensionaler Gegenstände 2 aus dem verformbaren Material 4. Die in den Figuren 9 bis 14 beschriebenen Vorrichtungen 1 sind teilweise ähnlich, teilweise jedoch auch unterschiedlich zu den in den Figuren 1 bis 6 dargestellten Ausführungsformen der Vorrichtung 1. Daher werden nachfolgend sämtliche Merkmale der Vorrichtungen 1 gemäß der Figuren 9 bis 14 beschrieben, wobei es auch möglich ist, bestimmte Merkmale und Eigenschaften der in den Figuren 1 bis 6 dargestellten Vorrichtungen 1 auf die in den Figuren 9 bis 14 dargestellten Vorrichtungen 1 zu übertragen und umgekehrt. Nachfolgend werden gleiche Bauteile mit den bereits für die Vorrichtungen 1 gemäß den Figuren 1 bis 6 verwendeten Bezugszeichen bezeichnet.

Die Vorrichtung 1 weist das Gehäuse 3 auf, das eine Kammer 21 zur Aufnahme des in den Figuren 9 bis 14 nicht dargestellten verformbaren Materials 4 aufweist. Das verformbare Material 4 wird mittels der in diesem Fall als Extruder ausgebildeten Zuführeinrichtung 5 über die Zuführleitung 6 in die Kammer 21 des Gehäuses 3 zugeführt. Die Zuführeinrichtung 5 ist im vorliegenden Fall so ausgeführt, dass sie die Funktion der Druckerzeugungseinrichtung 13 übernimmt, sodass diese nicht erforderlich ist. Obwohl die Kammer 21 in den Figuren 1 bis 6 nicht bezeichnet ist, so ist sie selbstverständlich auch dort vorhanden. Die Temperiereinrichtung 15, gegebenenfalls mit dem Temperatursensor 16, kann ebenfalls vorgesehen sein, ist jedoch in den Figuren 9 bis 14 nicht dargestellt.

Das verformbare Material 4 kann über die auch hier vorhandene erste Ausgabeöffnung 7 aus der Kammer 21 des Gehäuses 3 ausgegeben werden. Zum wahlweisen Verschließen und Freigeben der ersten Ausgabeöffnung 7 dient auch hier die Verschließeinrichtung 8, die nachfolgend als erste Verschließeinrichtung 8 bezeichnet wird. Die erste Verschließeinrichtung 8 ist ähnlich zu der in den Figuren 1 bis 6 dargestellten Verschließeinrichtung in Form einer Nadel ausgebildet. Die erste Verschließeinrichtung 8 weist einen im vorliegenden Fall in Längsrichtung x durch dieselbe verlaufenden Hohlraum 22 auf, der über eine Verbindungsbohrung 23 mit der ringförmig um die erste Verschließeinrichtung 8 angeordnete Kammer 21 des Gehäuses 3 verbunden ist und zu der zweiten Ausgabeöffnung 11 führt. In Richtung zu der zweiten Ausgabeöffnung 11 verjüngt sich in dieser Ausführung der Hohlraum 22 in einer Stufe, die sich oberhalb der Verbindungsbohrung 23 befindet. Eine Verjüngung ist nicht unbedingt notwendig. Die zweite Ausgabeöffnung 11 ist demnach eine in der ersten Verschließeinrichtung 8 vorgesehene Ausgabeöffnung, die zur Ausgabe des verformbaren Materials 4 aus dem Hohlraum 22 der ersten Verschließeinrichtung 8 dient. Demnach kann das verformbare Material 4 alternativ zu der ersten Ausgabeöffnung 7 oder der zweiten Ausgabeöffnung 11 ausgegeben werden. Des Weiteren ist es möglich, das verformbare Material 4 sowohl zu der ersten Ausgabeöffnung 7 als auch zu der zweiten Ausgabeöffnung 11 auszugeben. Diese unterschiedlichen Möglichkeiten der Konfiguration der Vorrichtung 1 werden nachfolgend ausführlich beschrieben. Dabei weist die zweite Ausgabeöffnung 11 einen kleineren Querschnitt als die erste Ausgabeöffnung 7 auf. Die Verbindungsbohrung 23 verläuft im vorliegenden Fall senkrecht zu dem Hohlraum 22, dies ist jedoch nicht unbedingt erforderlich.

Die Verbindungsbohrung 23 ist ähnlich zu der oben unter Bezugnahme auf Fig. 6 beschriebenen Löcher bzw. Öffnungen 20 in den Wänden der inneren Nadel 8a bzw. umgekehrt können mit den Löchern bzw. Öffnungen 20 in den Wänden der inneren Nadel 8a die hierin beschriebene Funktion der Verbindungsbohrung 23 realisiert werden. Die Verbindungsbohrung 23 kann auch als die zweite Zuführeinrichtung 12 gemäß dem Ausführungsbeispiel von Fig. 1 angesehen werden, wobei durch die Verbindungsbohrung 23 jedoch nicht das Zusatzmaterial 10 sondern das verformbare Material 4 ausgegeben wird.

Die Vorrichtung 1 weist des Weiteren eine zweite Verschließeinrichtung 24 auf, die zum wahlweisen Verschließen und Freigeben der Verbindungsbohrung 23 dient und innerhalb des Hohlraums 22 der ersten Verschließeinrichtung 8 angeordnet ist. Auf diese Weise kann die Zufuhr des verformbaren Materials 4 über die Verbindungsbohrung 23 in den Hohlraum 22 der ersten Verschließeinrichtung 8 unterbrochen werden, so dass mittels der zweiten Verschließeinrichtung 24 im Prinzip die zweite Ausgabeöffnung 11 verschlossen werden kann. Auch die zweite Verschließeinrichtung 24 ist ähnlich zu der ersten Verschließeinrichtung 8 in Form einer Nadel ausgebildet.

Die Figuren 9, 10 und 11 zeigen drei unterschiedliche Konfigurationen bzw. Stellungen der Vorrichtung 1. Bei der Konfiguration von Fig. 9 ist mittels der ersten Verschließeinrichtung 8 die erste Ausgabeöffnung 7 verschlossen. Mittels der zweiten Verschließeinrichtung 24 ist die Verbindungsbohrung 23 und somit auch die zweite Ausgabeöffnung 11 verschlossen. In dieser Konfiguration kann demnach kein verformbares Material 4 aus der Vorrichtung 1 austreten.

Bei der Konfiguration von Fig. 10 ist wie gemäß Fig. 9 mittels der ersten Verschließeinrichtung 8 die erste Ausgabeöffnung 7 verschlossen. Die Verbindungsbohrung 23 ist dagegen durch die zweite Verschließeinrichtung 24 freigegeben, so dass das verformbare Material 4 über die Kammer 21 und die Verbindungsbohrung 23 zu der zweiten Ausgabeöffnung 11 ausgegeben werden. Da die zweite Ausgabeöffnung 11 einen wesentlich geringeren Querschnitt als die erste Ausgabeöffnung 7 aufweist, wird das verformbare Material 4 dementsprechend mit einem sehr geringen Querschnitt bzw. sehr dünn ausgegeben.

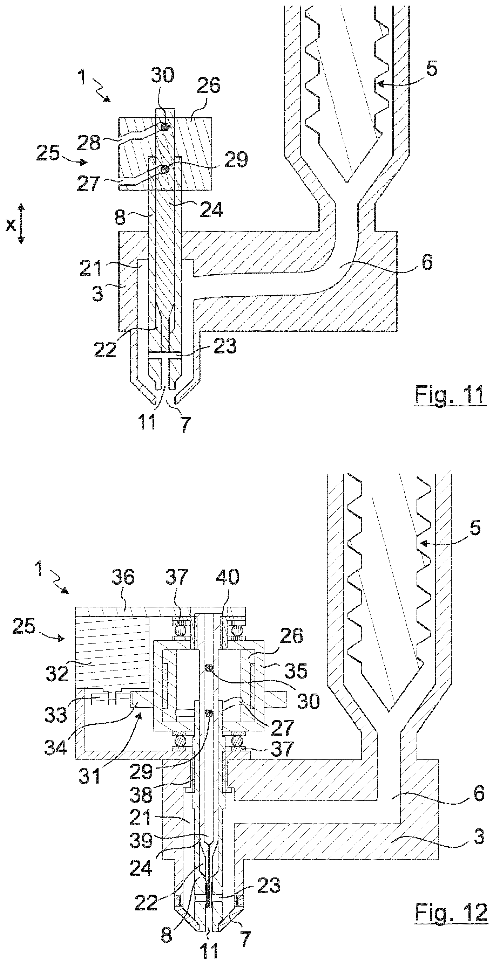

Bei der Konfiguration der Vorrichtung 1 gemäß Fig. 11 sind sowohl die erste Ausgabeöffnung 7 als auch die Verbindungsbohrung 23 geöffnet. Dadurch kann das verformbare Material 4 durch die erste Ausgabeöffnung 7 ausgegeben werden. Das verformbare Material 4 kann auch durch die Verbindungsbohrung 23 zu der zweiten Ausgabeöffnung 11 ausgegeben werden. Da jedoch die erste Ausgabeöffnung 7 ebenfalls freigegeben ist, ist dieser Anteil des verformbaren Materials 4 weniger relevant bzw. nicht relevant.

Vorzugsweise wird mittels der Vorrichtung 1 ein Verfahren zur Erzeugung der dreidimensionalen Gegenstände 2 aus dem verformbaren Material 4 hergestellt, das folgende Verfahrensschritte aufweist: einen Schritt des Ausgebens des verformbaren Materials 4 aus der ersten Ausgabeöffnung 7 der Kammer 21 des Gehäuses 3; einen Schritt des Ausgebens des verformbaren Materials 4 aus der zweiten Ausgabeöffnung 11 des Hohlraums 22, die einen kleineren Querschnitt aufweist als die erste Ausgabeöffnung 7. Der Schritt des Ausgebens des verformbaren Materials 4 aus der zweiten Ausgabeöffnung 11 wird vor dem Schritt des Ausgebens des verformbaren Materials 4 aus der ersten Ausgabeöffnung 7 des Gehäuses 3 durchgeführt, um eine durch das aus der zweiten Ausgabeöffnung 11 ausgegebene verformbare Material 4 gebildete Struktur mit dem aus der ersten Ausgabeöffnung 7 ausgegebenen verformbaren Material 4 zu erweitern und/oder zu versteifen. Selbstverständlich ist es mit der Vorrichtung 1 ebenso möglich, beliebig oft und in anderer Abfolge der Verfahrensschritte einen dreidimensionalen Gegenstand 2 zu erzeugen.

In dem in den Figuren 9, 10 und 11 dargestellten Ausführungsbeispiel der Vorrichtung 1 sind die beiden Verschließeinrichtungen 8 und 24 mittels einer Verstellanordnung 25 in ihrer mit "x" bezeichneten Längsrichtung verstellbar. Hierzu weist die Verstellanordnung 25 im dargestellten Ausführungsbeispiel eine in den Figuren 9, 10 und 11 ebenfalls dargestellte Steuerhülse 26 auf. Die Steuerhülse 26 weist wiederum zwei im vorliegenden Fall übereinander angeordnete Nuten 27 und 28 auf, in die jeweilige Stifte 29 und 30 eingreifen, die mit jeweils einer der Verschließeinrichtungen 8 bzw. 24 verbunden sind. Dabei sind die Steuerhülse 26 und wenigstens eine der Verschließeinrichtung 8 und/oder 24, im vorliegenden Fall beide Verschließeinrichtungen 8 und 24 relativ zueinander drehbar. Im dargestellten Ausführungsbeispiel greift der mit der ersten Verschließeinrichtung 8 verbundene Stift 29 in die untere Nut 27 der Steuerhülse 26 ein. Der mit der zweiten Verschließeinrichtung 24 verbundene Stift 30 greift in die obere Nut 28 der Steuerhülse 26 ein. Mittels der Steuerhülse 26 und der in die Nuten 27 und 28 eingreifenden Stifte 29 und 30 können die drei in den Figuren 9, 10 und 11 dargestellten Positionen der beiden Verschließeinrichtungen 8 und 24 eingestellt werden, indem die Stifte 29 und 30 in den Nuten 27 und 28 zwangsgeführt sind. Dadurch ist jeder Drehlage der Steuerhülse 26 genau eine axiale Lage der Verschließeinrichtungen 8 und 24 zugeordnet. Die beiden Verschließeinrichtungen 8 und 24 sind im dargestellten Ausführungsbeispiel also mittels der Steuerhülse 26 nicht nur zwangsgeführt sondern über die Steuerhülse 26 auch miteinander gekoppelt.

Der Verlauf der beiden Nuten 27 und 28 ist in der Position der Steuerhülse 26 gemäß Fig. 10 am besten erkennbar. Durch diesen Verlauf der Nuten 27 und 28 wird die beschriebene Bewegung der beiden Verschließeinrichtungen 8 und 24 gewährleistet. Dabei ist erkennbar, dass zum Übergang von dem in Fig. 9 dargestellten Zustand in den in Fig. 10 dargestellten Zustand die den mit der ersten Verschließeinrichtung 8 verbundenen Stift 29 aufnehmende Nut 27 horizontal verläuft, was dazu führt, dass die erste Verschließeinrichtung 8 bei der Drehbewegung der Steuerhülse 26 nicht angehoben wird. Vielmehr erfolgt lediglich eine Anhebung der zweiten Verschließeinrichtung 24, da die den mit der zweiten Verschließeinrichtung 24 verbundenen Stift 30 aufnehmende Nut 28 schräg verläuft. In dem in Fig. 10 rechten Bereich der Steuerhülse 26 verlaufen die beiden Nuten 27 und 28 beide schräg, wodurch, wenn sich die Stifte 29 und 30 in diesen Bereichen befinden, sowohl die erste Verschließeinrichtung 8 als auch die zweite Verschließeinrichtung 24 in Richtung ihrer Längsachse x angehoben werden. Die Schließbewegung der beiden Verschließeinrichtungen 8 und 24 erfolgt entgegen dieser Drehbewegungen, also von der Konfiguration von Fig. 11 über die Konfiguration von Fig. 10 zu der Konfiguration von Fig. 9.

In Fig. 12 ist eine Ausführungsform der Verstellanordnung 25 zur Verstellung der beiden Verschließeinrichtungen 8 und 24 der Vorrichtung 1 detailliert dargestellt. Dabei ist erkennbar, dass die Steuerhülse 26 mittels einer über eine Getriebeanordnung 31 mit der Steuerhülse 26 in Wirkverbindung stehende Antriebseinrichtung 32 verdrehbar ist. Im vorliegenden Fall ist die Getriebeanordnung 31 als Zahnradgetriebe ausgebildet, es kann jedoch auch ein Riemengetriebe oder ein anderes geeignetes Getriebe vorgesehen sein. Auch ein Direktantrieb durch die Antriebseinrichtung 32 ist denkbar. Die Antriebseinrichtung 32 kann auch ein Pneumatikzylinder oder ein Linearantrieb mit geeigneter Übersetzung sein.

Die Antriebseinrichtung 32 kann beispielsweise als Elektromotor ausgebildet sein. Die Antriebseinrichtung 32 treibt im vorliegenden Fall ein Zahnrad 33 an, das mit einem weiteren Zahnrad 34 kämmt. Das Zahnrad 34 treibt wiederum ein innerhalb desselben angeordnetes Gehäuse 35 an, das mit der Steuerhülse 26 fest verbunden ist. Auf diese Weise kann also mittels der Antriebseinrichtung 32 die Steuerhülse 26 um ihre Längsachse rotiert werden. Das Gehäuse 35 dient dabei zum Schutz der Steuerhülse 26 mit den Nuten 27 und 28 sowie der in die Nuten 27 und 28 der Steuerhülse 26 eingreifenden Stifte 29 und 30. Das Gehäuse 35 ist gegenüber einem weiteren Gehäuse 36 der Verstellanordnung 25 mittels zweier Lagereinrichtungen 37 drehbar gelagert.

Um die Bewegung der ersten Verschließeinrichtung 8 in ihrer Längsrichtung x, also in der in den Figuren dargestellten vertikalen Richtung der Vorrichtung 1, zu gewährleisten und Drehbewegungen derselben zu verhindern, ist die erste Verschließeinrichtung 8 drehfest gehalten. Im vorliegenden Fall ist die erste Verschließeinrichtung 8 an dem Gehäuse 3 der Vorrichtung 1 gehalten. Die zweite Verschließeinrichtung 24 ist mit einem Führungslager 40 an dem Gehäuse 36 rotationsgelagert. Das drehfeste Halten der Verschließeinrichtung 8 ist im vorliegenden Fall mittels der Hülse 38 realisiert, die an ihrer Außenseite fest mit den Gehäusen 3 und/oder 36 verbunden ist und an ihrer Innenseite einen unrunden Querschnitt aufweist, der dem äußeren Querschnitt der ersten Verschließeinrichtung 8 in diesem Bereich entspricht. Beispielsweise kann die Hülse 38 an ihrer Innenseite eine Verzahnung, ein Polygon oder ähnliches aufweisen, was ein drehfestes Halten bzw. eine Verdrehsicherung der ersten Verschließeinrichtung 8 gewährleistet. Es wäre jedoch auch möglich, die zweite Verschließeinrichtung 24 mittels einer entsprechenden Hülse 38 drehfest an dem Gehäuse 36 zu lagern. Des Weiteren könnte auch die erste Verschließeinrichtung 8 mit einer dem Führungslager 40 ähnlichen Konstruktion an den Gehäusen 3 und/oder 36 rotationsgelagert sein. Dies könnte zusätzliche Änderungen im Bereich der beiden Ausgabeöffnungen 7 und 11 erfordern.

Im Unterschied zu dem in den Figuren 9 bis 11 dargestellten Ausführungsbeispiel der Vorrichtung 1 ist bei der Ausführungsform der Vorrichtung 1 gemäß Fig. 12 in der zweiten Verschließeinrichtung 24 eine Durchgangsbohrung 39 vorgesehen, durch welche das nicht dargestellte Zusatzmaterial 10 durchgeführt werden kann. Die Bohrung 39 entspricht somit im Prinzip der Bohrung 9 der Ausführungsform der Vorrichtung 1 gemäß der Figuren 1 bis 6. Das gegebenenfalls durch die Bohrung 39 durchgeführte Zusatzmaterial 10 tritt im Bereich der zweiten Ausgabeöffnung 11 aus und kann von dem durch die zweite Ausgabeöffnung 11 ausgegebenen verformbaren Material 4 umhüllt werden. Es ist jedoch auch möglich, das Zusatzmaterial 10 mit dem durch die erste Ausgabeöffnung 7 ausgegebenen verformbaren Material 4 zu umhüllen.

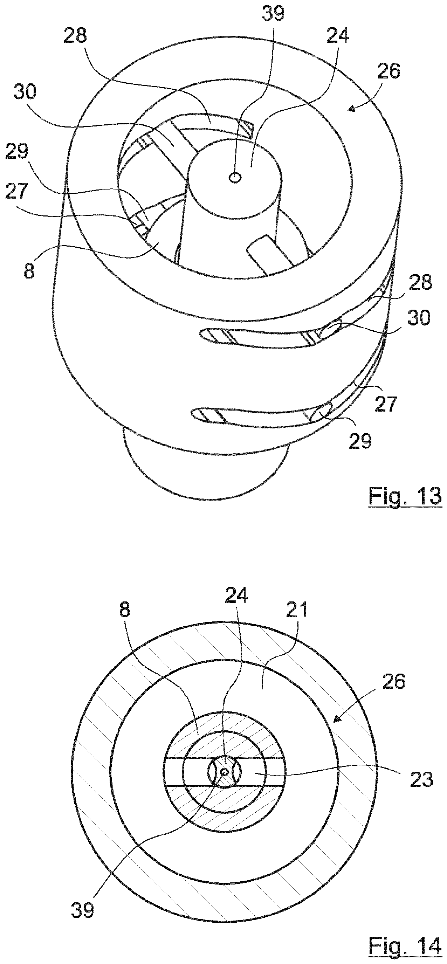

Fig. 13 zeigt die Steuerhülse 26 mit den beiden Nuten 27 und 28 und den in dieselben eingreifenden Stifte 29 und 30 in einer perspektivischen Ansicht. Im vorliegenden Fall sind jeweils zwei Nuten 27 und 28 und zwei Stifte 29 und 30 vorgesehen, es sind jedoch auch andere Anzahlen denkbar, wie zum Beispiel drei Nuten 27 und 28 und drei Stifte 29 und 30. Im Gegensatz zu der in Fig. 13 abgebildeten Ausführung können die Nuten 27 und 28 entlang der Rotationsrichtung der Steuerhülse 26 durchgängig verbunden sein. Zum Beispiel kann die Nut 27 eine kontinuierlich geschlossene Führung sein, die es ermöglicht, alle beliebigen Positionen der Verschließeinrichtung 8 durch Drehung der Steuerhülse 26 in eine Richtung anzuwählen. Dadurch kann sich der Steuerungsaufwand minimieren und die Steigung der Nuten 27 und 28 reduziert werden.

Entgegen der obigen Beschreibung ist auch eine Ausführungsform denkbar, bei der die Steuerhülse 26 fixiert ist und die Verschließeinrichtungen 8 und 24 rotiert werden. Diese wären dann in ähnlicher Weise wie oben beschrieben mittels der in die Nuten 27 und 28 der Steuerhülse 26 eingreifenden Stifte 29 und 30 zwangsgeführt, wodurch dieselbe oder eine ähnliche Bewegung der Verschließeinrichtungen 8 und 24 wie oben beschrieben erreichbar wäre. Des Weiteren ist die gekoppelte Bewegung der beiden Verschließeinrichtungen 8 und 24 mittels der Verstellanordnung 25 bzw. der Steuerhülse 26 nicht unbedingt erforderlich.

Fig. 14 zeigt eine alternative Ausführungsform der Steuerhülse 26. Dabei kann die Ansteuerung einer der beiden Verschließeinrichtungen 8 bzw. 24 ähnlich bzw. identisch zu der Bewegung gemäß der Figuren 9 bis 13 erfolgen. Dagegen wird die andere der Verschließeinrichtungen 8 bzw. 24 durch Rotieren derselben von ihrer geschlossenen in ihre in Fig. 14 dargestellte geöffnete Position gebracht, in der sie die Verbindungsbohrung 23 freigibt. Hierzu kann die zu rotierende der beiden Verschließeinrichtungen 8 bzw. 24 gegebenenfalls ohne Einbindung der Steuerhülse 26 von der Antriebseinrichtung 32 der Verstellanordnung 25 angetrieben werden. Die anzutreibende der beiden Verschließeinrichtungen 8 bzw. 24 weist hierbei zumindest in dem Bereich der Verbindungsbohrung 23 ein entsprechendes Profil auf, das es erlaubt, die Verbindungsbohrung 23 in einer Winkelstellung zu verschließen und in einer anderen freizugeben.

Die in den Figuren 9 bis 14 dargestellte und oben beschriebene Vorrichtung 1 ist im Prinzip beliebig skalierbar. Außerdem können noch weitere Ausgabeöffnungen und denselben zugeordnete Verschließeinrichtungen vorgesehen sein, beispielsweise innerhalb der zweiten Verschließeinrichtung 24. Zusätzlich sollten dabei der Verbindungsbohrung 23 entsprechende Bohrungen in den Verschließeinrichtungen vorgesehen sein.

Weitere bevorzugte Ausführungsformen sind im Folgenden beschrieben:
In einer bevorzugten Ausführungsform beschreibt die Offenbarung eine Vorrichtung (1) zur Erzeugung dreidimensionaler Gegenstände (2) aus einem verformbaren Material (4), mit folgenden Merkmalen:
einem Gehäuse (3), das eine Kammer (21) zur Aufnahme des verformbaren Materials (4) aufweist,
einer Zuführeinrichtung (5) zur Zuführung des verformbaren Materials (4) in die Kammer (21) des Gehäuses (3),
einer ersten Ausgabeöffnung (7) zur Ausgabe des verformbaren Materials (4) aus der Kammer (21) des Gehäuses (3),
einer ersten Verschließeinrichtung (8) zum wahlweisen Verschließen und Freigeben der ersten Ausgabeöffnung (7), welche einen über wenigstens eine Verbindungsbohrung (23) mit der Kammer (21) des Gehäuses (3) verbundenen Hohlraum (22) aufweist,
einer zweiten Ausgabeöffnung (11), die einen kleineren Querschnitt aufweist als die erste Ausgabeöffnung (7), zur Ausgabe des verformbaren Materials (4) aus dem Hohlraum (22) der ersten Verschließeinrichtung (8),
einer zweiten Verschließeinrichtung (24) zum wahlweisen Verschließen und Freigeben der Verbindungsbohrung (23).

In einer weiteren bevorzugten Ausführungsform ist die Offenbarung d a **durch gekenn-zeichnet**, dass die zweite Verschließeinrichtung (24) innerhalb des Hohlraums (22) der ersten Verschließeinrichtung (8) angeordnet ist.

In einer weiteren bevorzugten Ausführungsform ist die Offenbarung **dadurch gekenn-zeichnet**, dass die erste Verschließeinrichtung (8) zum wahlweisen Verschließen und Freigeben der ersten Ausgabeöffnung (7) mittels einer Verstellanordnung (25) in ihrer Längsrichtung (x) verstellbar ist.

In einer weiteren bevorzugten Ausführungsform ist die Offenbarung **dadurch gekenn-zeichnet**, dass die zweite Verschließeinrichtung (24) zum wahlweisen Verschließen und Freigeben der Verbindungsbohrung (23) mittels einer Verstellanordnung (25) in ihrer Längsrichtung (x) verstellbar ist.

In einer weiteren bevorzugten Ausführungsform ist die Offenbarung **dadurch gekenn-zeichnet**, dass die zweite Verschließeinrichtung (24) zum wahlweisen Verschließen und Freigeben der Verbindungsbohrung (23) mittels einer Verstellanordnung (25) um ihre Längsachse verdrehbar ist.

In einer weiteren bevorzugten Ausführungsform ist die Offenbarung **dadurch gekenn-zeichnet**, dass die Verstellanordnung (25) eine Steuerhülse (26) mit wenigstens einer Nut (27,28) aufweist, in die wenigstens ein mit einer der Verschließeinrichtungen (8,24) verbundener Stift (29,30) eingreift, wobei die Steuerhülse (26) und die wenigstens eine Verschließeinrichtung (8,24) relativ zueinander drehbar sind.

In einer weiteren bevorzugten Ausführungsform ist die Offenbarung **dadurch gekenn-zeichnet**, dass die Steuerhülse (26) und/oder die wenigstens eine Verschließeinrichtung (8,24) mittels einer über eine Getriebeanordnung (31) mit der Steuerhülse (26) und/oder der wenigstens einen Verschließeinrichtung (8,24) in Wirkverbindung stehende Antriebseinrichtung (32) verdrehbar ist.

In einer weiteren bevorzugten Ausführungsform ist die Offenbarung **dadurch gekenn-zeichnet**, dass die Getriebeanordnung (31) als Zahnradgetriebe oder als Riemengetriebe ausgebildet ist.

In einer weiteren bevorzugten Ausführungsform ist die Offenbarung **dadurch gekenn-zeichnet**, dass wenigstens eine der Verschließeinrichtungen (8,24) drehfest gehalten ist.

In einer weiteren Ausführungsform beschreibt die Offenbarung ein Verfahren zur Erzeugung dreidimensionaler Gegenstände (2) aus einem verformbaren Material (4) mit folgenden Verfahrensschritten: einem Schritt des Ausgebens des verformbaren Materials (4) aus einer ersten Ausgabeöffnung (7) einer Kammer (21) eines Gehäuses (3),
einem Schritt des Ausgebens des verformbaren Materials (4) aus einer zweiten Ausgabeöffnung (11) eines Hohlraums (22), der sich in einer über eine Verbindungsbohrung (23) mit der Kammer (21) des Gehäuses (3) verbundenen, zum wahlweisen Verschließen und Freigeben der ersten Ausgabeöffnung (7) dienenden Verschließeinrichtung (8) befindet und einen kleineren Querschnitt aufweist als die erste Ausgabeöffnung (7), wobei der Schritt des Ausgebens des verformbaren Materials (4) aus der zweiten Ausgabeöffnung (11) vor dem Schritt des Ausgebens des verformbaren Materials (4) aus der ersten Ausgabeöffnung (7) des Gehäuses (3) durchgeführt wird, um eine durch das aus der zweiten Ausgabeöffnung (11) ausgegebene verformbare Material (4) gebildete Struktur mit dem aus der ersten Ausgabeöffnung (7) ausgegebenen verformbaren Material (4) zu erweitern und/oder zu versteifen.

## Patentansprüche

1. Vorrichtung zur Erzeugung dreidimensionaler Gegenstände aus einem verformbaren Material, mit folgenden Merkmalen: einem Gehäuse, das eine Kammer zur Aufnahme des verformbaren Materials aufweist, einer Zuführeinrichtung zur Zuführung des verformbaren Materials in die Kammer des Gehäuses, einer ersten Ausgabeöffnung zur Ausgabe des verformbaren Materials aus der Kammer des Gehäuses, einer Verschließeinrichtung mit Längsbohrung zum wahlweisen Verschließen und Freigeben der ersten Ausgabeöffnung, einer zweiten Ausgabeöffnung, die einen kleineren Querschnitt aufweist als die erste Ausgabeöffnung und die Bohrung sich in Längsrichtung x aufteilt, wobei die Ausgabeöffnungen konzentrisch angeordnet sind.

2. Vorrichtung nach Anspruch 1, wobei der Querschnitt der ersten Ausgabeöffnung zumindest in mehreren Stufen und vorzugsweise stufenlos eingestellt werden kann und die Nadel (8a) in ihrer Längsrichtung x zumindest in mehreren Stufen und vorzugsweise stufenlos gegenüber dem Gehäuse beweglich ist, wodurch die Durchflussmenge und das Ausgabevolumen des verformbaren Materials durch die erste Ausgabeöffnung zumindest in mehreren Stufen und vorzugsweise stufenlos veränderbar ist.

3. Vorrichtung nach Anspruch 1 oder 2, wobei die erste Verschließeinrichtung in beliebigen Stellungen zwischen einem vollständigen Freigeben und einem vollständigen Verschließen der ersten Ausgabeöffnung positioniert werden kann (Seite 2 letzter Absatz) und/oder mittels einer Verstellanordnung in ihrer Längsrichtung (x) verstellbar ist.

4. Vorrichtung nach Anspruch 1, 2 oder 3, wobei die Verstellanordnung eine Steuerhülse mit wenigstens einer Nut aufweist.

5. Vorrichtung nach einem der vorhergehenden Ansprüche, wobei eine Verschließeinrichtung mittels einer über eine Getriebeanordnung mit der Steuerhülse und/oder der einen Verschließeinrichtung in Wirkverbindung stehende Antriebseinrichtung verdrehbar ist.

6. Vorrichtung nach einem der vorhergehenden Ansprüche, wobei Getriebeanordnung als Zahnradgetriebe oder als Riemengetriebe ausgebildet ist.

7. Vorrichtung nach einem der vorhergehenden Ansprüche, wobei die Verschließeinrichtungen drehfest gehalten ist.

8. Vorrichtung nach einem der vorhergehenden Ansprüche, wobei die Verstellanordnung eine Steuerhülse mit wenigstens einer Nut aufweist, in die wenigstens ein mit der Verschließeinrichtung verbundener Stift eingreift, wobei die Steuerhülse und die Verschließeinrichtung relativ zueinander drehbar sind.

9. Vorrichtung nach einem der vorhergehenden Ansprüche, wobei die Steuerhülse und/oder die Verschließeinrichtung mittels einer über eine Getriebeanordnung mit der Steuerhülse und/oder der Verschließeinrichtung in Wirkverbindung stehende Antriebseinrichtung verdrehbar ist.

10. Vorrichtung nach einem der vorhergehenden Ansprüche, wobei die Antriebseinrichtung 32 ein Pneumatikzylinder oder ein Linearantrieb mit geeigneter Übersetzung ist.

11. Vorrichtung nach Anspruch 10, wobei die Verschließeinrichtung durch einen Pneumatikzylinder oder Linearantrieb bewegt wird.

12. Verfahren zur Erzeugung dreidimensionaler Gegenstände aus einem verformbaren Material, wobei eine Vorrichtung nach einem der Ansprüche 1 bis 8 verwendet wird.
